# EUROPÄISCHE PATENTSCHRIFT

(11) **EP 0 396 151 B1**
(45) Veröffentlichungstag und Bekanntmachung des Hinweises auf die Patenterteilung: **09.02.1994**
(21) Anmeldenummer: 90108517.5
(22) Anmeldetag: 07.05.1990
(51) Int. Cl.: B29C 57/00, F16L 47/04, F16L 23/00

(54) **Verfahren zur Herstellung einer Rohrflanschverbindung**
Method for manufacturing a pipe flange joint
Procédé pour fabriquer une connexion de bride de tuyau

(30) Priorität: 05.05.1989 DE 3914756
(43) Veröffentlichungstag der Anmeldung: 07.11.1990
(73) Patentinhaber: Platzer Schwedenbau GmbH, 63150 Heusenstamm (DE)
(72) Erfinder: Imgram, Friedrich, D-6056 Heusenstamm (DE)
(74) Vertreter: Linser, Heinz

(56) Entgegenhaltungen:
- DD-A- 228 019
- DE-A- 2 900 773
- DE-A- 3 806 162
- US-A- 4 613 163

## Beschreibung

Die Erfindung betrifft eine Flanschverbindung aus zwei Rohren, welche aus vernetzten Kunststoffen bestehen und im Strangpreßverfahren hergestellt sind, wobei die Rohrenden zur Erzeugung von Flanschelementen mit ausgeformten Kopfstücken mittels einer entsprechend ausgebildeten Form
a. partiell über den Kristallitschmelzpunkt erwärmt werden, oder
b. im kalten Zustand (bei Zimmertemperatur) mit hohem Druck verpreßt werden,

worauf die erwärmten oder verpreßten Hohlstrangenden die gewünschte Formänderung bleibend einnehmen und das geformte Kopfstück jedes Flanschelements einen mit dem Hohlstrang integrierten Außenbund aufweist, dessen Außendurchmesser größer als der Außendurchmesser des Hohlstranges ist.

Zum Transport strömungsfähiger Medien, beispielsweise im Heizungs- oder Sanitärbereich oder auch im Kraftfahrzeugwesen, finden zunehmend Kunststoffprodukte und insbesondere Kunststoffrohre Anwendung. Diese Materialien weisen eine hervorragende Langzeitbeständigkeit auch bei hohen Temperaturen und Drücken auf und sind gegen die meisten sowohl im Sanitär- oder Heizungsbereich als auch im Automobilbau und in anderen technischen Bereichen vorkommenden Zusätze beständig.

Sollen beispielsweise die Rohre bei der Installation einer starken Biegung unterworfen werden, so kann dies im kalten Zustand erfolgen, wobei sich die Querschnitte in den Biegungen verengen.

Es sind auch aus der DE-OF 31 52 022.7, auf welcher der Oberbegriff des Anspruchs 1 basiert, Verfahren bekannt, die ein einseitiges Erwärmen beschreiben, um eine Verformung zu erreichen, bei der die Biegestellen etwa den gleichen Querschnitt aufweisen wie das unverformte Rohr.

Rohre dieser Art werden vorzugsweise nach dem chemischen Vernetzungsverfahren gemäß der DE-PS 16 79 826 hergestellt.

Diese Rohre zeichnen sich durch eine Formbeständigkeit aus, die auch bei Temperaturen über dem Kristallitschmelzpunkt von ca. 140°C weiterbesteht.

Damit lassen sich in sehr einfacher Weise auch mehrachsige Produkte herstellen, wobei jedoch noch ein erhebliches Bedürfnis an einfachen, sicheren und dichten Rohrbverbindungen besteht.

Aus der DE - A - 29 00 773 ist eine Flanschverbindung für Kunststoffrohre bekannt, deren Flansche an den Stoßflächen in Form einer ebenen Kreisfläche ausgebildet sind, wobei die der Verbindungsstelle abgewandte Flanke des Flansches mit einem Metallring versehen ist, der mehrere über dessen Umfang verteilte Einbuchtungen besitzt, zwischen denen eine ebene schräge Fläche vorgesehen ist. Der Ring wird dabei mit dem Flansch bereits im Urformprozeß mit dem Kunststoff fest verbunden.

Eine solche Flanschverbindung ist schwierig herzustellen und in der Handhabung aufwendig.

Der vorliegenden Erfindung liegt die Aufgabe zugrunde, das eingangs genannte Verfahren zur Herstellung von Kunststoffrohren vorzugsweise anzuwenden, um Rohrverbindungen in Form von spezifischer Flanschverbindungen herstellen zu können.

Die Lösung dieser Aufgabe besteht nach der Erfindung darin, daß nach dem bekannten Verfahren herstellte Hohlstränge oder Rohre mit geformten Kopfstücken hergestellt werden, bei denen sich der Außenbund in Achsrichtung des Hohlstranges über sein Ende hinaus erstreckt oder um diesen Betrag zurückversetzt ist und im montierten Zustand der Flanschverbindung jeweils ein Metallring gegen die mindestens teilweise senkrecht zum Rohrmantel verlaufende Fläche des Außenbundes anliegt und die Metallringe der Flanschverbindung mit Hilfe von Spannelementen zusammengepreßbar sind.

Nach der Erfindung erhalten die Rohrenden somit eine Formgebung, welche die Herstellung einer Rohrflanschverbindung erheblich vereinfacht, wobei die Metallringe die von den Spannelementen ausgeübten radialen und axialen Kraftkomponenten aufnehmen und auf den jeweiligen Außenbund etwa gleichmäßig verteilen und axial wirken, so daß die Außenbunde zusammengepreßt werden. Hierbei wird das Rohrmaterial durch seine konstruktiven Formgebungen selbst als Dichtungsmaterial genutzt.

Der Außenbund des ausgeformten Kopfstückes des Hohlrohrstranges oder Rohrendes ist - im Querschnitt betrachtet - rechtwinklig ausgebildet oder weist konische Stützflächen auf, wobei die Metallringe mit jeweils entsprechender Formgebung plan anliegen.

In Weiterbildung der Erfindung weisen die Metallringe im Querschnitt eine konisch verlaufende Außenseite auf und die Schenkel des als Schelle ausgebildeten Spannelements sind hierbei mit der gleichen Neigung versehen.

Bei einer weiteren Ausführungsform der Erfindung befindet sich im montierten Zustand der Flanschverbindung zwischen den Hohlstrang- oder Rohrenden ein Ring aus Metall, Keramik, Metall-Keramik, Kunststoff oder materialgleichem Kunststoff, welcher an seinen Frontseiten eine um den Ring verlaufende Aussparung und/oder einen entsprechend überstehenden Bund aufweist, welche so dimensioniert sind, daß der Teil des Außenbundes, der sich über das Ende des Hohlstranges oder Rohres erstreckt bzw. um diesen Betrag zurückversetzt ist, der Aussparung bzw. dem überstehenden Bund des Ringes entspricht.

Diese Lösung hat den Vorteil, daß alle Rohrenden die gleiche Formgebung aufweisen können, so daß sich das Herstellungsverfahren der Endstücke wesentlich vereinfacht.

Ein weiterer Vorteil dieser Lösung besteht darin, daß der Ring mindestens eine Radialbohrung mit jeweils einem Innengewinde zum Anschluß jeweils einer Rohrverschraubung aufweist, so daß Rohrabzweigungen bzw. Verteiler in einfacher Weise und je nach Bedarf eingebaut werden können.

Die gegeneinanderstoßenden Flächen des Außenbundes mit den Ringelementen können dabei eine ebene Fläche oder auch eine gewellte oder mäanderförmige Fläche aufweisen, so daß in einfacher Weise die Dichtungsflächen vergrößert werden und Dichtungskammern entstehen, welche die Dichtwirkung erheblich verbessern.

Weitere vorteilhafte Lösungen gehen aus den übrigen Unteransprüchen hervor.

Die Erfindung wird anhand der Zeichnung, in der verschiedene Ausführungsbeispiele dargestellt sind, näher erläutert.
Hierbei zeigen:
- FIGUR 1: eine Flanschverbindung mit Metallringen und einer Spannschelle;
- FIGUR 2: eine Flanschverbindung mit im Querschnitt konisch geformten Metallringen und einer Spannschelle;
- FIGUR 3: eine Flanschverbindung mit im Querschnitt rechteckig geformten Metallringen, einem Zwischenring und einer Spannschelle;
- FIGUR 4: eine Flanschverbindung mit im Querschnitt konisch geformten Metallringen, einem Zwischenring und einer Spannschelle;
- FIGUR 5: eine Flanschverbindung mit im Querschnitt rechteckig geformten Metallringen mit Bohrungen für Verspannschrauben und einem Zwischenring.
- FIGUR 6: eine Flanschverbindung mit im Querschnitt konisch geformten Metallringen mit Bohrungen für Verspannschrauben;
- FIGUR 7: eine Flanschverbindung mit im Querschnitt rechteckig geformten Metallringen mit Bohrungen für Verspannschrauben;
- FIGUR 8: a und b einen Metallring mit drei Bohrungen zur Aufnahme von Spannbolzen;
- FIGUR 9: a und b einen Metallring mit konischer Innenfläche und mit drei Bohrungen zur Aufnahme von Spannbolzen;
- FIGUR 10: a und b eine Spannschelle mit einer Bolzenspannvorrichtung, und
- FIGUR 11: a und b eine Spannschelle aus mehreren Gliedern.

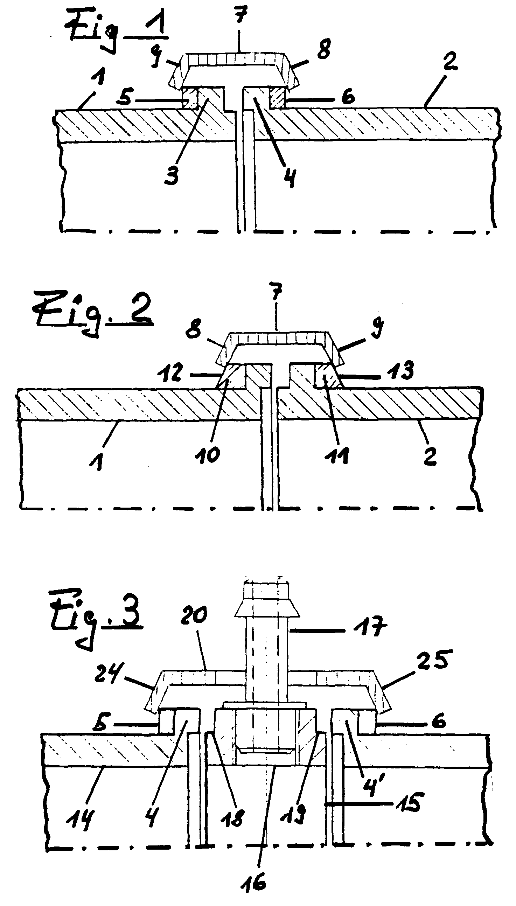

Die Figur 1 zeigt eine Flanschverbindung zwischen zwei Rohrenden 1 und 2 unmittelbar vor der Endmontage. Beide Kopfstücke dieser Rohrenden 1 und 2 sind jeweils mit einem integrierten Außenbund 3 und 4 unterschiedlicher Formgebung versehen. In beiden Fällen sind die Außendurchmesser größer als die Außendurchmesser der Rohrenden. Der Außenbund 4 erstreckt in Achsrichtung des Rohres 2 über das Ende des Rohres 2 hinaus, während das geformte Kopfstück des anderen Rohrendes 1 mit einem Außenbund 3 versehen ist, welcher in Achsrichtung des Rohres 1 um den Teil zurückversetzt ist, um den der Außenbund 4 sich über das Ende des Rohres 2 erstreckt, so daß diese Elemente nach der Endmontage ineinander greifen.

Beide Außenbunde 3 und 4 sind im Querschnitt rechteckig ausgebildet, so daß ihre Radialflächen senkrecht auf den Rohrmantel gerichtet sind. Gegen jede radiale Fläche der Außenbunde 3 und 4, welche dem jeweiligen Rohr 1 bzw. 2 zugekehrt sind, liegt ein Ring 5 bzw. 6, welcher die Kräfte der Schelle 7, falls diese punkt- oder linienförmig auf die Metallringe 5 und 6 angreifen, auf den gesamten Umfang verteilt. Die Schelle 7 ist im Schnitt betrachtet U-förmig ausgebildet, wobei die Schenkel 8 und 9 zur Vertikalen geneigt sind. Damit läßt sich bei der Endmontage eine erhebliche Spannwirkung in Axialrichtung erzielen. Die nach der Endmontage ineinandergreifenden Außenbunde 3 und 4 bewirken zusätzlich zu den Stoßflächen der Rohrenden 1 und 2, welche noch gewellt ausgebildet sein können, eine merkliche Vergrößerung der Dichtflächen, insbesondere durch den mäanderförmigen Verlauf der Flächen.

Die Figur 2 zeigt eine der Figur 1 ähnliche Ausführungsform, wobei jedoch die Ringe 5 und 6 nach Figur 1 durch die Ringe 10 und 11 ersetzt sind, welche jeweils eine konisch verlaufende Fläche 12 und 13 aufweisen. Die Neigung dieser Ringflächen 12 und 13 ist etwa gleich der Neigung der U-förmigen Schenkel 8 und 9 der Schelle 7, so daß ausreichend große Anlageflächen vorhanden sind.

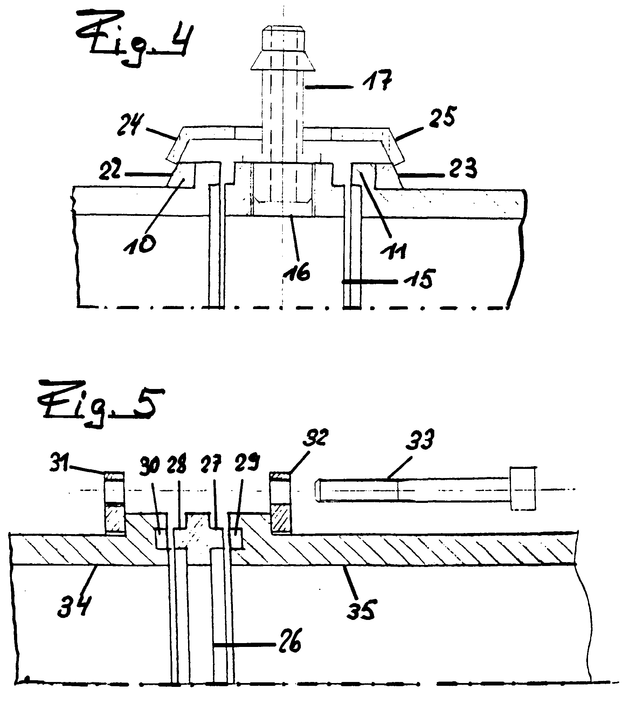

Die Figur 3 zeigt eine Flanschverbindung im vormontierten Zustand, bei der beide Kopfstücke der Rohrenden 14 und 14' jeweils mit einem integrierten Außenbund 4 und 4' mit gleicher Formgebung versehen sind. In beiden Fällen sind die Außendurchmesser größer als die Außendurchmesser der Rohrenden 14 und 14'. Die Außenbunde 4 und 4' sind in Achsrichtung des Rohres über das Ende des jeweiligen Rohres 14 bzw. 14' hinaus erstreckt. Im vormontierten und montierten Zustand befindet sich zwischen den Hohlstrang- oder Rohrenden 14 und 14' ein Zwischenring 15 aus Metall Keramik, Metall-Keramik, Kunststoff oder materialgleichem Kunststoff, welcher an seinen Frontseiten eine um den gesamten Zwischenring verlaufende Aussparung 18 und 19 aufweist, welche so dimensioniert sind, daß der Teil des Außenbundes 4 bzw. 4', der sich über das Ende des Rohres 14 bzw. 14' erstreckt, der jeweiligen Aussparung entspricht, so daß im montierten Zustand versetzte Stoßflächen vorhanden sind, welche die wirksamen Dichtflächen merklich vergrößern. Die verwendeten Metallringe 5 und 6 entsprechen den Metallringen nach Figur 1.

Der Ring 15 ist ferner mit einer Bohrung 16 versehen, welche den Rohranschluß 17 aufweist. Für die Durchführung des Rohranschlusses 17 ist die Schelle 20 ebenfalls mit einer Bohrung 21 ausgerüstet. In einer nicht dargestellten Ausführungsform der Erfindung ist der Ring 15 mit mehreren Rohranschlüssen 17 ausgerüstet, welche auch unterschiedliche Rohrquerschnitte aufweisen können. Da sich der Ring 15 leicht auswechseln läßt, kann eine geeignete Vernetzung eines Rohrsystems in einfacher Weise durchgeführt werden.

Die Figur 4 zeigt eine Ausführungsform, welche derjenigen nach Figur 3 entspricht, jedoch mit der Abweichung, daß die Metallringe 5 und 6 gemäß Figur 3 im Qerschnitt jeweils mit einer konisch verlaufenden Außenfläche 22 und 23 versehen sind, wobei deren Neigung der Neigung der U-förmigen Schenkel 24 und 25 der Schelle 20 entspricht. Die übrigen Elemente sind gleichartig und daher mit gleichen Bezugszeichen versehen.

Die Figur 5 zeigt eine Flanschverbindung mit einem Zwischenring 26, der an seinem Umfang auf beiden Stirnseiten mit einer umlaufend geschlossenen Wulst oder Feder 27 und 28 ausgebildet ist. Korrespondierend dazu ist in jeder Stirnseite der Rohrenden 34 und 35 in deren Außenbund jeweils eine Nut 29 und 30 zur Aufnahme der entsprechenden Wulst 27 bzw. 28 vorgesehen.

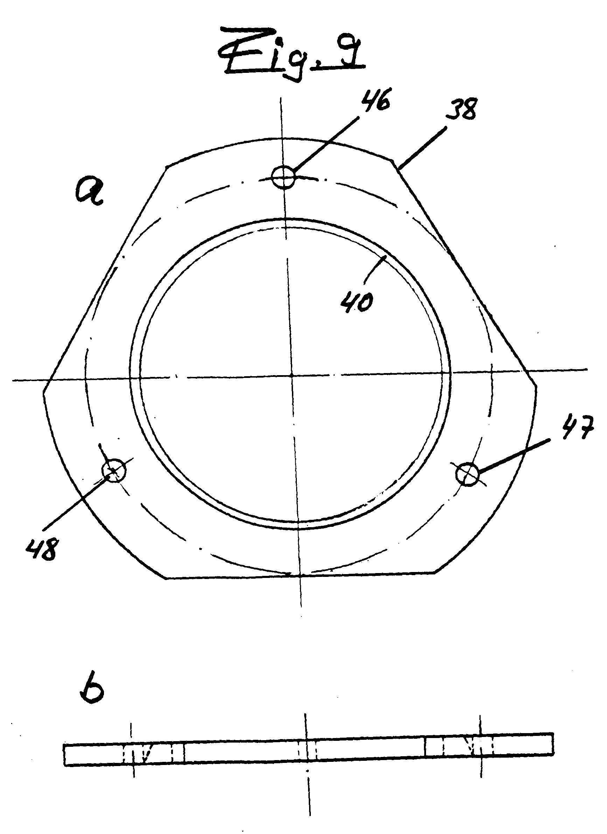

Als Spannelement sind Metallringe 31 und 32 vorgesehen, welche durch Bolzen 33 verspannt werden. Die Metallringe werden anhand der Figur 8 beschrieben.

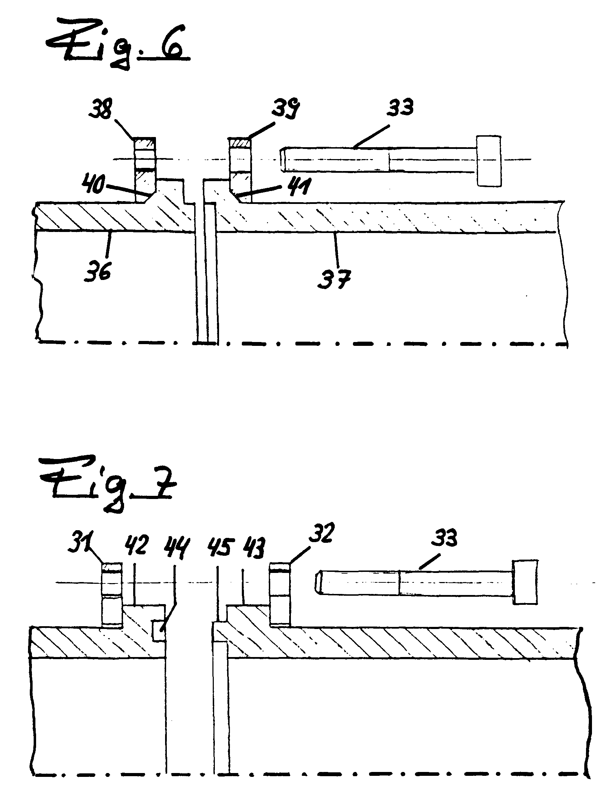

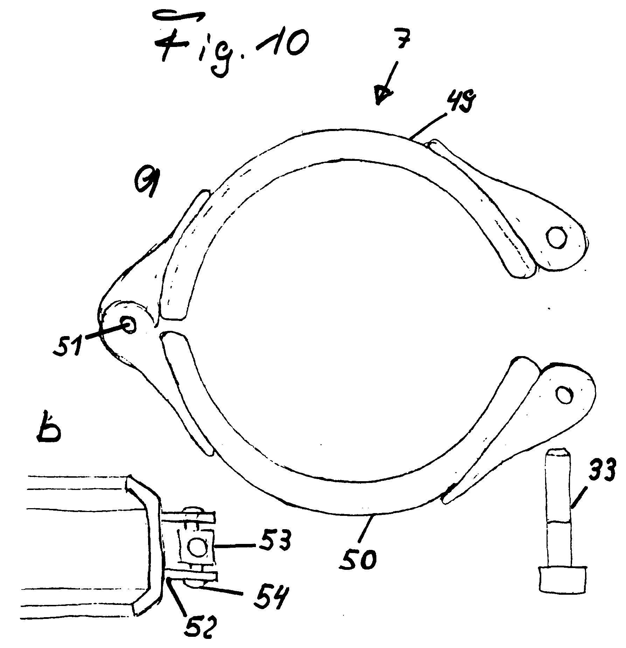

Die Figur 6 zeigt eine Flanschverbindung der Rohrenden 36 und 37 mit einem Spannelement aus Metallringen 38 und 39, welche mit einem Spannbolzen 33 verspannt werden. Die Metallringe 38 und 39, welche anhand der Figur 9 näher beschrieben werden, weisen jeweils eine konische Innenfläche 40 und 41 auf, die jeweils gegen eine entsprechend ausgebildete konische Fläche des Außenbundes anliegen.

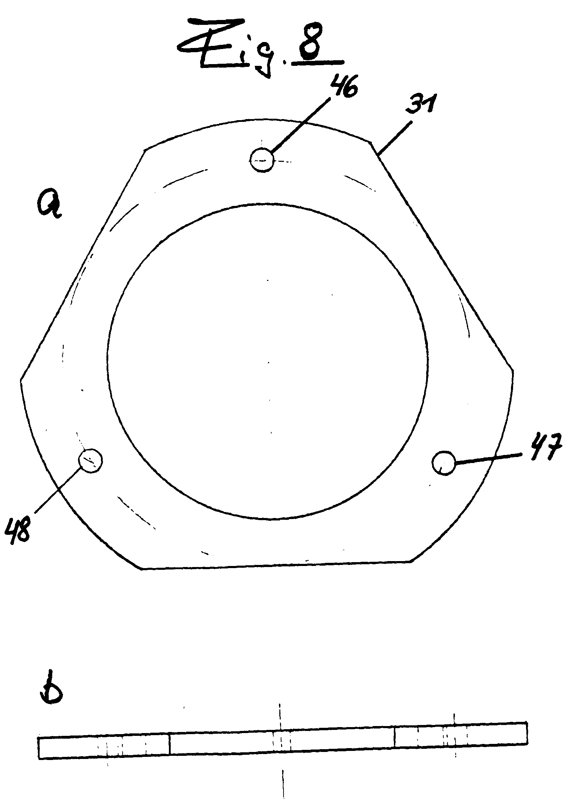

Die Figur 7 zeigt ein weiteres Ausführungsbeispiel der Erfindung. Hierbei sind die Stirnflächen der Außenbunde 42 und 43 mit einer Nut 44 und einer entsprechenden Wulst oder Feder 45 versehen. Als Spannelement werden Metallringe 31 und 32 nach Figur 5 verwendet, welche durch Bolzen 33 verspannt werden.

Die Figur 8 zeigt in Draufsicht a) und im Querschnitt b) einen Metallring 31, welcher mit drei Bohrungen 46, 47 und 48 zur Durchführung von Schraubbolzen 33 zwecks Verspannung mit einem gleichartigen Gegenstück versehen ist. Im montierten Zustand der Flanschverbindung liegt jeweils ein Metallring 31 gegen die zum Rohrmantel verlaufende Fläche des Außenbundes an und über die Schraubbolzen erfolgt die gegenseitige Verspannung und damit die Endmontage der Flanschverbindung.

Die Figur 9 zeigt in Draufsich a) und im Querschnitt b) einen Metallring 38, ähnlich wie in Figur 8 dargestellt, jedoch mit einer konischen Innenfläche 40 (s. hierzu Figur 6).

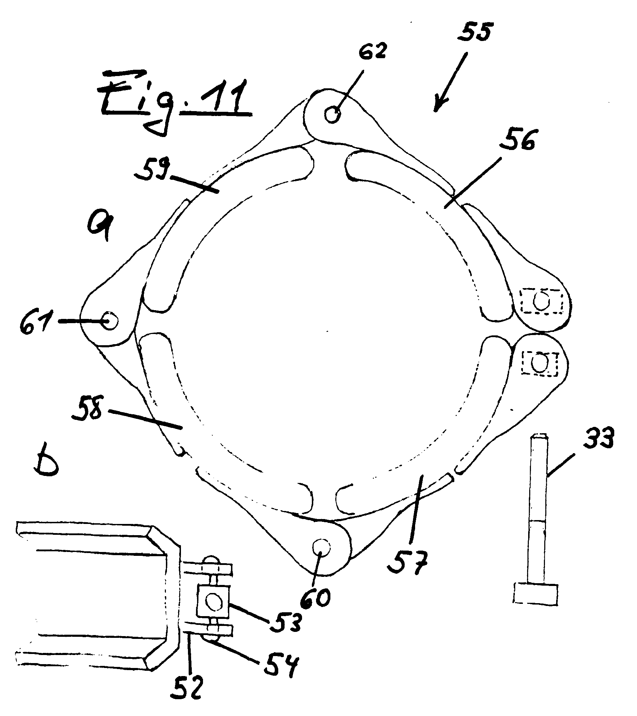

Die Figur 10 zeigt eine als Schelle 7 ausgebildete Spannvorrichtung in Draufsicht a) mit Bolzen und Spannelement 52 gemäß b), welche um 90° gedreht ist. Die Schelle 7 besteht aus zwei Teilen 49 und 50, welche um die Achse 51 schwenkbar ausgebildet sind. Das Spannelement 52 weist ein Bolzenführungselement 53 auf, welches um die Achse 54 schwenkbar gelagert ist. Das Bolzenführungselement 53 ist zur Durchführung des Bolzens 33 mit einer Bohrung versehen, während das entsprechende Gegenstück im Teil 49 der Schelle mit einer Bohrung mit Innengewinde versehen ist, so daß der Bolzen 33 verschraubt und die Schelle 7 gespannt werden kann.

Die Figur 11 zeigt eine als mehrgliedrige Schelle 55 ausgebildete Spannvorrichtung in Draufsicht a) mit Bolzen 33 und Spannelement 52 gemäß b), welche um 90° gedreht ist. Die Schelle 55 besteht aus vier Teilen 56, 57, 58 und 59, welche um die Achsen 60, 61 und 62 schwenkbar ausgebildet sind. Das Spannelement 52 weist wie in der Ausführungsform nach Figur 10 ein Bolzenführungselement 53 auf, welches um die Achse 54 schwenkbar gelagert ist. Das Bolzenführungselement 53 ist zur Durchführung des Bolzens 33 mit einer Bohrung versehen, während das entsprechende Gegenstück im Teil 56 der Schelle 55 mit einer Bohrung mit Innengewinde versehen ist, so daß der Bolzen 33 verschraubt und die Schelle 7 gespannt werden kann.

Das Spannelement nach Figur 11 weist die besonderen Eigenschaften auf, daß die Spannkräfte eine kreisförmige Verspannung des Rohres bewirken, welche über die Metallringe in Achsrichtung der Rohre umgelenkt werden, so daß eine ovale Verformung der Rohrenden ausgeschlossen ist.

Die Erfindung ermöglicht die Herstellung von Flanschverbindungen der unerschiedlichsten Arten, wobei die Verwendung eines Zwischenringes mit Rohranschlüssen in vorteilhafter Weise eine Vielzahl von Abzweigungen ermöglicht.

## Patentansprüche

1. Flanschverbindung aus zwei Rohren, welche aus vernetzten Kunststoffen bestehen und im Strangpreßverfahren hergestellt sind, wobei die Rohrenden zur Erzeugung von Flanschelementen mit ausgeformten Kopfstücken mittels einer entsprechend ausgebildeten Form
a. partiell über den Kristallitschmelzpunkt erwärmt werden, oder
b. im kalten Zustand (bei Zimmertemperatur) mit hohem Druck verpreßt werden,
worauf die erwärmten oder verpreßten Hohlstrangenden die gewünschte Formänderung bleibend einnehmen und das geformte Kopfstück jedes Flanschelements einen mit dem Hohlstrang integrierten Außenbund aufweist, dessen Außendurchmesser größer als der Außendurchmesser des Hohlstranges ist, **dadurch gekennzeichnet, daß** sich der Außenbund (4,5) in Achsrichtung des Hohlstranges (1,2) über sein Ende hinaus erstreckt oder um diesen Betrag zurückversetzt ist und daß im montierten Zustand der Flanschverbindung jeweils ein Metallring (5,6) gegen die mindestens teilweise senkrecht zum Rohrmantel verlaufende Fläche des Außenbundes (3,4) anliegt und die Metallringe (5,6) der Flanschverbindung mit Hilfe von Spannelementen (7) zusammengepreßbar sind.

2. Flanschverbindung nach Anspruch 1, **dadurch gekennzeichnet, daß** die Metallringe (5,6) im Querschnitt rechteckig ausgebildet sind.

3. Flanschverbindung nach Anspruch 1 oder 2, **dadurch gekennzeichnet, daß** der Außenbund (4,5) des ausgeformten Kopfstückes des Hohlstranges oder Rohrendes (1,2) im Querschnitt rechtwinklig ausgebildet ist.

4. Flanschverbindung nach Anspruch 1, 2 oder 3, **dadurch gekennzeichnet, daß** im montierten Zustand der Flanschverbindung zwischen den Hohlstrang- oder Rohrenden (14,14') ein Ring (15) aus Metall, Keramik, Metall-Keramik, Kunststoff oder materialgleichem Kunststoff angeordnet ist, welcher an seinen Frontseiten eine um den Ring verlaufende Aussparung (18,19) und/oder einen entsprechend überstehenden Bund aufweist, welche so dimensioniert sind, daß der Teil des Außenbundes, der sich über das Ende des Hohlstranges oder Rohres erstreckt bzw. um diesen Betrag zurückversetzt ist, der Aussparung bzw. dem überstehenden Bund des Ringes entspricht.

5. Flanschverbindung nach Anspruch 4, **dadurch gekennzeichnet, daß** der Ring (15) mindestens eine Radialbohrung (16) mit jeweils einem Innengewinde zum Anschluß jeweils einer Rohrverschraubung (17) aufweist.

6. Flanschverbindung nach Anspruch 4, **dadurch gekennzeichnet, daß** der Ring (15) mit im Spritzgußverfahren hergestellten integralen Rohranschlüssen versehen ist, welche über den Umfang des Ringes verteilt sind.

7. Flanschverbindung nach Anspruch 1 bis 6, **dadurch gekennzeichnet, daß** die Frontseite des Außenbundes eine im Querschnitt rechteckigen oder geringfügig konisch verlaufenden Fortsatz [Feder] (45) aufweist, welcher auf der Frontseite des Außenbundes einen geschlossenen Kreis um die Rohrachse bildet, wobei das Gegenstück der Hohlstrang- oder Rohrverbindung im gleichen Radius eine entsprechend ausgeformte Nut (44) zur Aufnahme des Fortsatzes [Feder] aufweist.

8. Flanschverbindung nach Anspruch 1 bis 7, **dadurch gekennzeichnet, daß** die Metallringe (5,6) der Flanschverbindung mittels der Spannvorrichtung (7;20) verspannt sind, welche als eine Schelle mit U-förmigen Schenkeln ausgebildet ist.

9. Flanschverbindung nach Anspruch 8, **dadurch gekennzeichnet, daß** die Metallringe (10,11) eine konisch verlaufende Außenseite (22,23) aufweisen und die Schenkel (24,25) der Schelle, welche im montierten Zustand gegen die konischen Außenseiten der Metallringe pressen, mit der gleichen Neigung versehen sind.

10. Flanschverbindung nach den Ansprüchen 3 bis 9, **dadurch gekennzeichnet, daß** der Außenbund eine konisch ausgebildete Seitenfläche (40,41) aufweist, gegen die im montierten Zustand ein Metallring mit einer innenliegenden Schrägfläche preßt.

11. Flanschverbindung von zwei Hohlstrangenden nach den Ansprüchen 3 bis 10, **dadurch gekennzeichnet, daß** im montierten Zustand der Verbindung jeweils ein Metallring (31,32) gegen die zum Rohrmantel verlaufende Fläche des Außenbundes anliegt und die Metallringe der Flanschverbindung mindestens zwei Bohrungen (46,47,48) zur Durchführung von Schraubbolzen (33) zur Verspannung der Metallringe aufweisen.

12. Flanschverbindung nach den Ansprüchen 7 bis 10, **dadurch gekennzeichnet, daß** die Schelle als Spannschelle mit einem Schraubanschluß (52,53,54) ausgebildet ist.

13. Flanschverbindung von zwei Hohlstrangenden nach Anspruch 7 bis 10, **dadurch gekennzeichnet, daß** die Schelle als Spannschelle mit einem Bajonettverschluß ausgebildet ist.

14. Flanschverbindung nach den Ansprüchen 12 oder 13, **dadurch gekennzeichnet, daß** die Schelle aus mindestens zwei Teilen (49) und (50) besteht, wobei jeweils zwei Schellenteile um eine Achse (51) schwenkbar ausgebildet sind.

15. Flanschverbindung nach den Ansprüchen 2 bis 14, **dadurch gekennzeichnet, daß** die gegeneinanderstoßenden Flächen des Außenbundes ein gewellte oder mäanderförmige korrespondierende Flächen aufweisen.

## Claims

1. Flanged coupling joint of two pipes made of polymeric synthetic materials and manufactured by the extrusion process, wherein, in order to produce flange elements with moulded head pieces by means of a correspondingly shaped mould, the pipe ends are
a. partially heated above the crystal-grain melting point, or
b. extruded at high pressure in the cold state (at room temperature),
in which process the heated or extruded tube ends receive the required change in shape permanently and the moulded head piece of each flange element has an outer collar integral with the hollow tube, the external diameter of which collar is greater than the external diameter of the hollow tube, characterised in that the outer collar (4, 5) extends in the axial direction of the hollow tube (1, 2) to a certain distance beyond the end of said tube, or is set back to an equal distance, and in that when the flanged connection is assembled a metal ring (5, 6) lies against the back face of the outer collar (3, 4), which face, at least in part, extends perpendicularly to the pipe wall, and the metal rings (5, 6) of the flanged connection can be pressed together with the aid of clamping elements (7).

2. Flanged connection according to Claim 1, characterised in that the metal rings (5, 6) are quadrilateral in cross-section.

3. Flanged connection according to Claim 1 or 2, characterised in that the outer collar (4, 5) of the moulded head piece of the hollow tube or pipe end (1, 2) is rectangular in cross-section.

4. Flanged connection according to Claim 1, 2 or 3, characterised in that when the flanged connection is assembled a ring (15) of metal, ceramic, powder metal, synthetic material, or similar synthetic products is disposed between the ends (14, 14') of the hollow tube or pipe, which ring has in its side faces a recess (18, 19) extending around it and/or a correspondingly projecting collar which is dimensioned such that the portion of the outer collar that extends beyond the end of the hollow tube or pipe or is set back to an equal distance corresponds to the recess or to the projecting collar of the ring.

5. Flanged connection according to Claim 4, characterised in that the ring (15) has at least one radial bore (16) with an internal thread for connecting a screwed pipe coupling (17).

6. Flanged connection according to Claim 4, characterised in that the ring (15) is provided with integral pipe connections manufactured by the injection moulding process, which are distributed around the perimeter of the ring.

7. Flanged connection according to Claims 1 to 6, characterised in that the front face of the outer collar has a spigot (45) rectangular or insignificantly conical in cross-section, which forms on the front face of the outer collar a closed ring around the axis of the pipe, and wherein the counterpart of the hollow tube connection or pipe connection has a correspondingly formed channel (44) of the same radius for receiving the spigot.

8. Flanged connection according to Claims 1 to 7, characterised in that the metal rings (5, 6) of the flanged connection are tightened by means of the clamping device (7; 20), which is formed as a bracket with U-shaped limbs.

9. Flanged connection according to Claim 8, characterised in that the metal rings (10, 11) have a conically extending back side (22, 23) and the limbs (24, 25) of the bracket, which, when the connection is assembled, press against the conical back sides of the metal rings, have the same inclination.

10. Flanged connection according to Claims 3 to 9, characterised in that the outer collar has a conically formed back face (40, 41), against which a metal ring with an inclined inner face presses when the connection is assembled.

11. Flanged connection of two hollow tube ends according to Claims 3 to 10, characterised in that when the connection is assembled a metal ring (31, 32) lies against the back collar face that extends to the pipe wall, and the metal rings of the flanged connection have at least two bores (46, 47, 48) through which screw-threaded bolts are introduced for tightening the metal rings.

12. Flanged connection according to Claims 7 to 10, characterised in that the bracket is formed as a clamp with a screw connection (52, 53, 54).

13. Flanged connection of two hollow tube ends according to Claims 7 to 10, characterised in that the bracket is formed as a clamp with a bayonet lock.

14. Flanged connection according to Claim 12 or 13, characterised in that the bracket consists of at least two parts (49) and (50), wherein each part can be pivoted about an axis (51).

15. Flanged connection according to Claims 2 to 14, characterised in that the mating faces of the outer collars are correspondingly undulating or serpentine faces.

## Revendications

1. Raccord à brides de deux tubes en matière synthétique réticulée et fabriqués par extrusion, dans lequel, en vue de la création d'éléments de bride avec pièces de tête mises en forme au moyen d'une matrice correspondante, les extrémités des tubes
a. sont partiellement réchauffées au-delà du point de fusion des cristallites, ou
b. sont pressées à froid (à température ambiante) sous haute pression,
suite à quoi les extrémités réchauffées ou pressées des tubes extrudés prennent de manière permanente la forme voulue, et la pièce de tête mise en forme de chaque élément de bride présente une collerette extérieure intégrée au tube extrudé et dont le diamètre extérieur est plus grand que le diamètre extérieur du tube extrudé, caractérisé en ce que la collerette extérieure (4, 5) s'étend dans la direction axiale du tube extrudé (1, 2) au-delà de son extrémité, ou est décalée de la même distance en arrière, et en ce que dans l'état monté du raccord à brides, une bague métallique (5, 6) repose contre la face de chaque collerette extérieure (3, 4) qui s'étend au moins en partie perpendiculairement à l'enveloppe des tubes, et les bagues métalliques (5, 6) du raccord à brides peuvent être pressées l'une vers l'autre à l'aide d'éléments de serrage (7).

2. Raccord à brides selon la revendication 1, caractérisé en ce que les bagues métalliques (5, 6) présentent une section transversale rectangulaire.

3. Raccord à brides selon la revendication 1 ou 2, caractérisé en ce que la collerette extérieure (4, 5) de la pièce de tête mise en forme du tube extrudé ou de l'extrémité du tube (1, 2) présente en coupe transversale une section à angles droits.

4. Raccord à brides selon la revendication 1, 2 ou 3, caractérisé en ce que, dans l'état monté du raccord à brides, une bague (15) en métal, en céramique, en métal et céramique, en matière synthétique différente ou non de celle des tubes, est disposée entre les extrémités (14, 14') des tubes extrudés ou tuyaux, cette bague (15) présentant sur ses faces frontales une découpe (18, 19) qui s'étend autour de la bague et/ou une collerette en saillie correspondante, lesquelles sont dimensionnées de telle sorte que la partie de la collerette extérieure qui déborde au-delà de l'extrémité du tube extrudé ou du tuyau, ou qui est décalée de la même distance en arrière, correspond à la découpe ou à la collerette en saillie de la bague.

5. Raccord à brides selon la revendication 4, caractérisé en ce que la bague (15) présente au moins un alésage radial (16) avec un filet intérieur pour se raccorder chacun à un raccord vissé (17).

6. Raccord à brides selon la revendication 4, caractérisé en ce que la bague (15) est dotée de raccords tubulaires intégrés fabriqués par moulage par injection, qui sont distribués à la périphérie de la bague.

7. Raccord à brides selon les revendications 1 à 6, caractérisé en ce que la face frontale de la collerette extérieure présente un appendice [une languette] (45) de section transversale rectangulaire ou légèrement conique, qui forme sur la face frontale de la collerette extérieure un cercle fermé entourant l'axe du tube, la contre-pièce du raccord du tube extrudé ou tuyau présentant sur le même rayon une rainure (44) de forme correspondante, pour la reprise de l'appendice [de la languette].

8. Raccord à brides selon les revendications 1 à 7, caractérisé en ce que les bagues métalliques (5, 6) du raccord à brides sont serrées au moyen du dispositif de serrage (7; 20) qui présente la forme d'un étrier à ailes en U.

9. Raccord à brides selon la revendication 8, caractérisé en ce que les bagues métalliques (10, 11) présentent une face extérieure (22, 23) s'étendant coniquement, et en ce que les ailes (24, 25) de l'étrier, qui en position montée pressent contre les faces extérieures coniques des bagues métalliques, sont dotées de la même pente.

10. Raccord à brides selon les revendications 3 à 9, caractérisé en ce que la collerette extérieure présente une surface latérale (40, 41) de forme conique, que vient comprimer en position montée, une bague métallique à surface intérieure inclinée.

11. Raccord à brides de deux extrémités de tubes extrudés selon les revendications 3 à 10, caractérisé en ce que, dans l'état monté du raccord, une bague métallique (31, 32) repose contre chacune des surfaces de la collerette extérieure entourant l'enveloppe du tube, et en ce que les bagues métalliques du raccord à brides présentent au moins deux alésages (46, 47, 48) pour le passage de tiges filetées (33) de serrage des bagues métalliques.

12. Raccord à brides selon les revendications 7 à 10, caractérisé en ce que l'étrier se présente sous la forme d'un étrier de serrage à raccord à visser (52, 53, 54).

13. Raccord à brides de deux extrémités de tubes extrudés selon les revendications 7 à 10, caractérisé en ce que l'étrier se présente sous la forme d'un étrier de serrage à fermeture à baïonnette.

14. Raccord à brides selon les revendications 12 ou 13, caractérisé en ce que l'étrier est constitué d'au moins deux pièces (49) et (50), dont deux au moins sont réalisées pivotantes autour d'un axe (51).

15. Raccord à brides selon les revendications 2 à 14, caractérisé en ce que les surfaces s'appuyant l'une contre l'autre de la collerette extérieure présentent chacune une surface correspondante ondulée ou sinueuse.
